# EUROPÄISCHE PATENTSCHRIFT

(11) **EP 1 940 711 B1**
(45) Veröffentlichungstag und Bekanntmachung des Hinweises auf die Patenterteilung: **02.03.2011**
(21) Anmeldenummer: 06828836.4
(22) Anmeldetag: 19.10.2006
(51) Int. Cl.: B65G 57/06, B65G 57/22

(54) **VORRICHTUNG UND VERFAHREN ZUM ANORDNEN VON STAPELN FLACHER GEGENSTÄNDE AUF PALETTEN**
DEVICE AND METHOD FOR ARRANGING STACKS OF FLAT OBJECTS ON PALLETS
DISPOSITIF ET PROCEDE POUR PLACER DES PILES D'OBJETS PLATS SUR DES PALETTES

(30) Priorität: 19.10.2005 DE 102005049964
(43) Veröffentlichungstag der Anmeldung: 09.07.2008
(73) Patentinhaber: Windmöller & Hölscher KG, 49525 Lengerich (DE)
(72) Erfinder: KÖLKER, Martin, 49477 Ibbenbüren (DE)
(74) Vertreter: Schneider, Bernd
(86) Internationale Anmeldenummer: PCT/EP2006/010085
(87) Internationale Veröffentlichungsnummer: WO 2007/045468

(56) Entgegenhaltungen:
- AT-B- 410 541
- DD-A1- 207 878
- DE-A1- 3 432 284
- FR-A1- 2 259 771
- FR-A1- 2 584 381
- US-A1- 2001 024 612

## Beschreibung

Die Erfindung betrifft eine Vorrichtung und ein Verfahren zum Anordnen von Stapeln flacher Gegenstände auf Paletten.

Es ist bekannt, Paletten mit Hilfe von Palettiervorrichtungen mit Stapeln flacher Gegenstände zu beladen. Unter anderem befasst sich die Druckschrift EP 0 652 171 B1 mit einer solchen Vorrichtung. In der Regel handelt es sich bei den flachen Gegenständen um Säcke oder Sackhalbzeuge wie Schlauchstücke. Diese Gegenstände werden mit relativ großer Herstellgeschwindigkeit gefertigt und zu Stapeln zusammengefasst, die anschließend auf Paletten angeordnet werden.

Es lassen sich verschiedene Typen von Palettiervorrichtungen unterscheiden. So sind Palettiervorrichtungen bekannt, die auf Schwenkarm-, Horizontalknickarm- oder Vertikal-Knickarmrobotern beruhen. Diesen drei Typen ist gemeinsam, dass sie mehrere Rotationsachsen als Bewegungsmöglichkeiten umfassen, so dass ein Greifer im Raum so orientiert werden kann, wie es für die Handhabungsaufgabe notwendig ist.

Andere bekannte Palettiervorrichtungen sind jedoch dem Typ "Linearroboter" zuzuordnen. Dieser Typ zeichnet sich dadurch aus, dass entlang der Achsen des Raumes (kartesisches Koordinatensystem) lineare Bewegungen möglich sind. Häufig umfasst eine solche Palettiervorrichtung ein Schienensystem, mit dem ein Schlitten in einer horizontalen Ebene verfahrbar ist. Der Schlitten umfasst dann eine Einrichtung zum Verfahren der Greifvorrichtung in vertikaler Richtung. Zusätzlich kann die Rotation um eine Achse, beispielsweise um die Vertikalachse, möglich sein, um die Greifvorrichtung drehen und damit in einem beliebigen Winkel zur Palette positionieren zu können. Ein solcher Linearroboter ist in der Regel als Portalroboter ausgestaltet. In diesem Fall stützen sich die Bewegungsvorrichtungen auf Schienen ab, die sich über vier, gegebenenfalls auch mehr als vier, Stützen auf dem Boden abstützen, so dass die zu beladende Palette unterhalb der Schienen in den Palettierbereich bewegt werden kann.

Die vorliegende Erfindung ist mit besonderem Vorteil in solchen Linearrobotern einsetzbar.

Palettiervorrichtungen verfügen in der Regel über einen Palettierbereich, der so bemessen ist, dass er eine Standardpalette aufnehmen kann. Die Anordnung der Stapel auf einer solchen Palette wird von einer Greifvorrichtung vorgenommen. Bei dieser Greifvorrichtung handelt es sich in der Regel um ein Greiferzangenpaar, das zu einem Zeitpunkt einen Stapel erfassen kann. Die Greifvorrichtung wird ihrerseits von Bewegungsmitteln bewegt, welche die Greifvorrichtung an die gewünschten Stellen bewegt. Diese Bewegungsmittel erlauben also zumindest die Bewegung der Greifer in einer Ebene. In der Regel transportieren sie die Greifer oder die Greifvorrichtung von dem Ort, an dem die Greifvorrichtung die Stapel übernimmt, bis zu dem Ort, an dem sie den jeweiligen Stapel auf der oder den Paletten ablegt.

Ein weitere Element einer solchen Palettiervorrichtung ist eine Zuführvorrichtung, welche die Stapel der Greifvorrichtung zuführt. In der Regel werden die Stapel also zu einem bestimmten Übergabepunkt gebracht. Förderbänder oder Rollen sind oft die bestimmenden Elemente solcher Zuführvorrichtungen.

Bei einer weiteren Steigerung der Geschwindigkeit, mit der die flachen Gegenstände hergestellt werden, stoßen die Palettiervorrichtungen des Standes der Technik an Grenzen. Daher werden mittlerweile oft mehrere Palettiervorrichtungen hinter modernen Sackherstellvorrichtungen vorgesehen. Diese Maßnahme ist jedoch teuer und kostet wertvollen Platz in einer Produktionshalle. Darüber hinaus erzeugen zwei solche Palettiereinrichtungen eben auch zwei halbleere Paletten, wenn der Rest eines Auftrages nur noch für die Bestückung einer Palette ausreicht.

Die Druckschrift FR 2 584 381 A1 offenbart ein Verfahren zum Beladen von Paletten mit Stapeln flachen Gegenstände gemäß dem Oberbegriff des Anspruchs 10 und zeigt eine Vorrichtung zum Palettieren von Stapeln flacher Gegenstände gemäß dem Oberbegriff des Anspruchs 1, welche folgende Merkmale umfasst:
- einen Palettierbereich, in dem eine Palette beladen wird,
- eine Ladevorrichtung, welche die Stapel in dem Palettierbereich anordnet und welche eine Greifvorrichtung zum Ergreifen von Stapel und ein Bewegungsmittel zum Bewegen der und ein Bewegungsmittel zum Bewegen der Greifvorrichtung relativ zum Palettierbereich umfasst, und
- eine Zuführvorrichtung welche die Stapel an die Ladevorrichtung heranführt, wobei zwei Greifvorrichtungen dem Palettierbereich zugeordnet sind.

Solche Vorrichtungen sind jedoch aufwändig und damit kostenintensiv.

Die Aufgabe der vorliegenden Erfindung ist es, diesen Nachteilen abzuhelfen. Diese Aufgabe wird durch die Vorrichtung des Anspruchs 1 und das Verfahren des Anspruchs 10 gelöst.

Den zumindest zwei Greifvorrichtungen wird also eine Bewegungsvorrichtung zugeordnet, bei der eine Zwangskopplung der Bewegung in zumindest einer Raumrichtung (x,y,z,ϕ) stattfindet. Durch diese Zwangskopplung verfügen die zumindest zwei Greifvorrichtungen eben nicht mehr jeweils über eine unabhängige Bewegungsvorrichtung.

Gegenüber zwei völlig unabhängigen Greifvorrichtungen - die natürlich im Schadensfall Redundanz gewährleisten - können sich auf diese Weise Kosteneinsparungen ergeben. Eine Kopplung der Bewegungen - auch in anderen Raumrichtungen - kann jedoch zu Kosteneinsparungen führen. So können zumindest zwei Greifvorrichtungen gemeinsam gehoben und abgesenkt werden (z-Richtung). Auch eine gemeinsame Drehung zumindest zweier Greifvorrichtungen (ϕ-Richtung) kann von Vorteil sein. Naturgemäß umfasst der Begriff zumindest eine Bewegungsrichtung auch der Fälle, in denen mehrere Bewegungsrichtungen zwangsgekoppelt sind.

Insbesondere zur Sicherstellung der Redundanz ist es andererseits jedoch auch vorteilhaft, wenn mit den zumindest zwei Greifvorrichtungen der gesamte Palettierbereich beladbar ist.

Auch wenn ein Palettierroboter lediglich mit einer Greifvorrichtung ausgestattet ist, ist es von allgemeinem Vorteil, wenn die Stapel bereits an den

Übergabestellen - oder gar davor - gedreht werden können. Diese Dreh- oder Ausrichtestationen können der Zuführvorrichtung zugeordnet sein und damit, wie erwähnt, den Greifern beziehungsweise deren Bewegungsmitteln in Transportrichtung der flachen Gegenstände vorgelagert sein. Damit können diese Ausrichtestationen gegebenenfalls auch gegenüber dem Maschinengestell stillstehen. In diesem Fall kann auf Drehmittel, die von den Bewegungsmitteln mitbewegt werden müssen, verzichtet werden. Damit sinkt die Masse der Maschinenbestandteile, die von den Bewegungsmitteln bewegt werden müssen. Auch Geschwindigkeitssteigerungen sind auf diese Weise zu erreichen. Diese bisher unbekannte Variante wirkt sich jedoch auf die erfindungsgemäßen Ausführungsbeispiele und andere Varianten der Erfindung besonders positiv aus. Weitere Kosteneinsparungen sind möglich, wenn die zumindest zwei Greifvorrichtungen von einer gemeinsamen Zuführvorrichtung beschickt werden.

Weitere Ausführungsbeispiele der Erfindung gehen aus der gegenständlichen Beschreibung und den Ansprüchen hervor.

Die einzelnen Figuren zeigen:
- Fig. 1: Eine Skizze (Draufsicht) eines Ausführungsbeispiels, das kein Teil des vorliegenden Enfindung ist
- Fig. 2: Eine Skizze (Draufsicht) eines ersten Ausführungsbeispiels der Erfindung
- Fig. 3: Eine Skizze (Draufsicht) eines zweiten Ausführungsbeispiels der Erfindung
- Fig. 4: Eine Skizze (Draufsicht) einer ersten Anordnung von Greiferzangenpaaren beim Doppelgreifer
- Fig. 5: Eine Skizze (Draufsicht) einer zweiten Anordnung von Greiferzangenpaaren beim Doppelgreifer

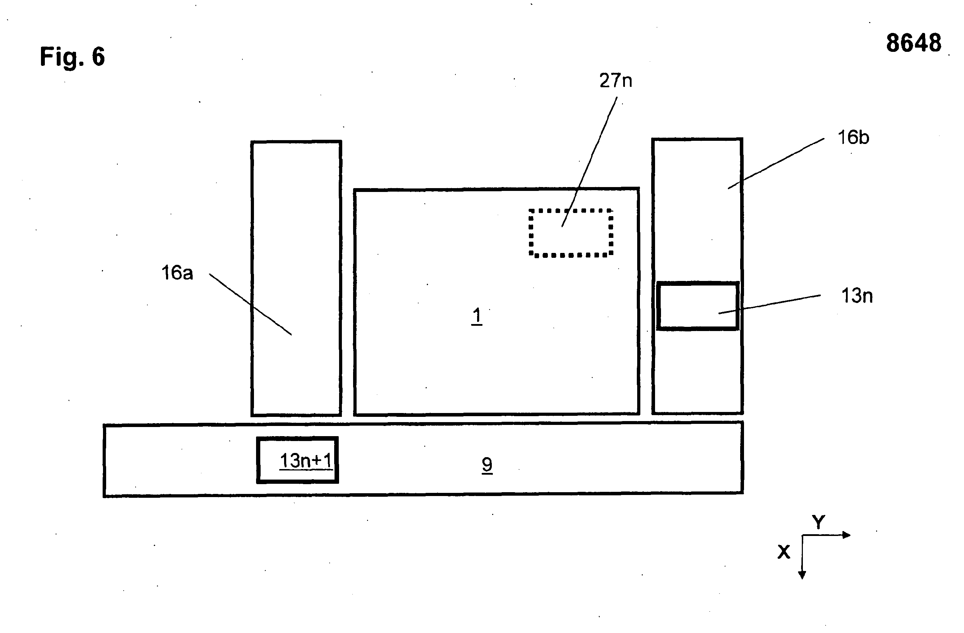

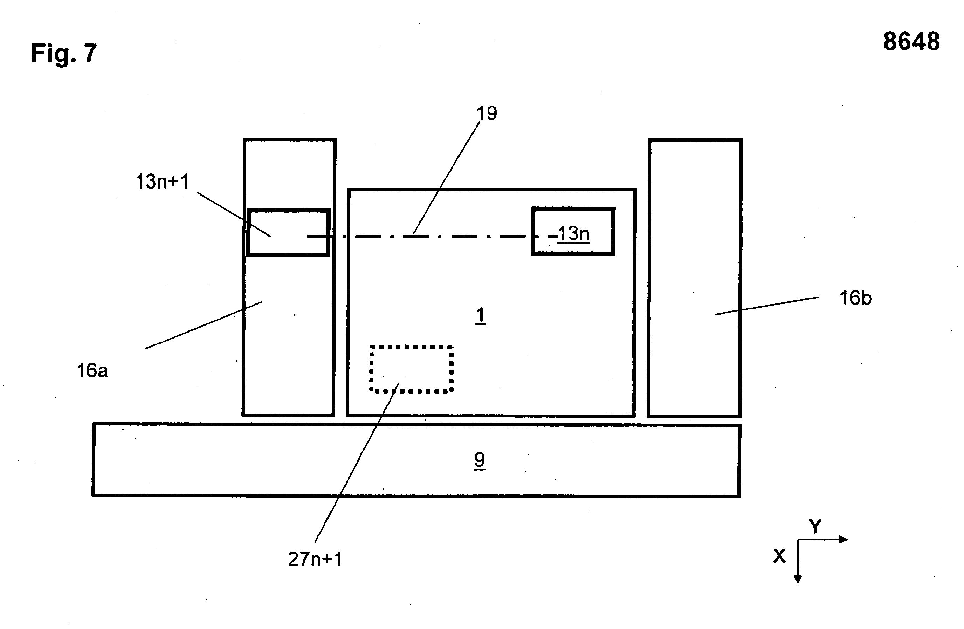

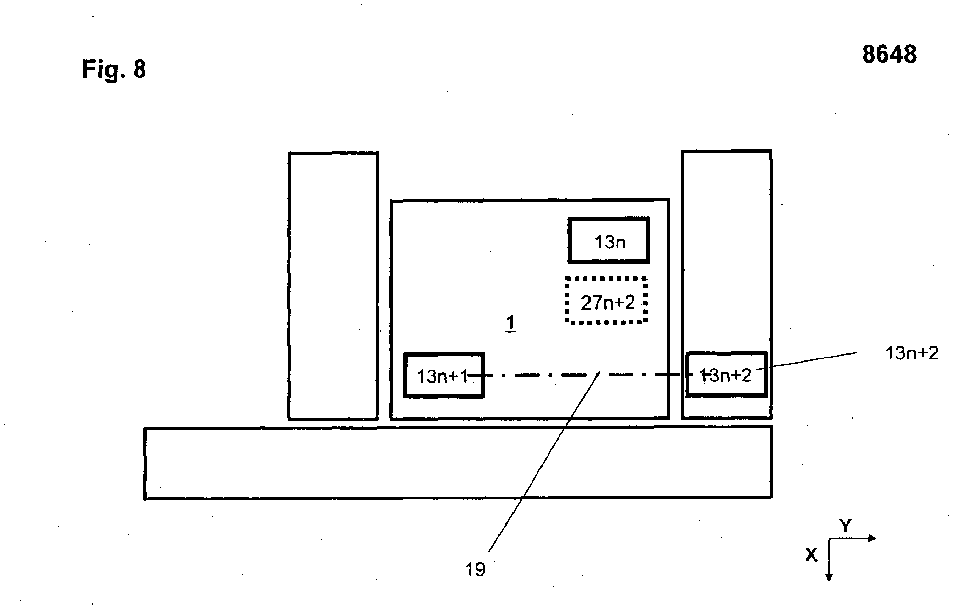

- Fig. 6, 7, 8: Darstellung der Durchführung des Ablegens mehrerer Sackstapel auf einer Palette

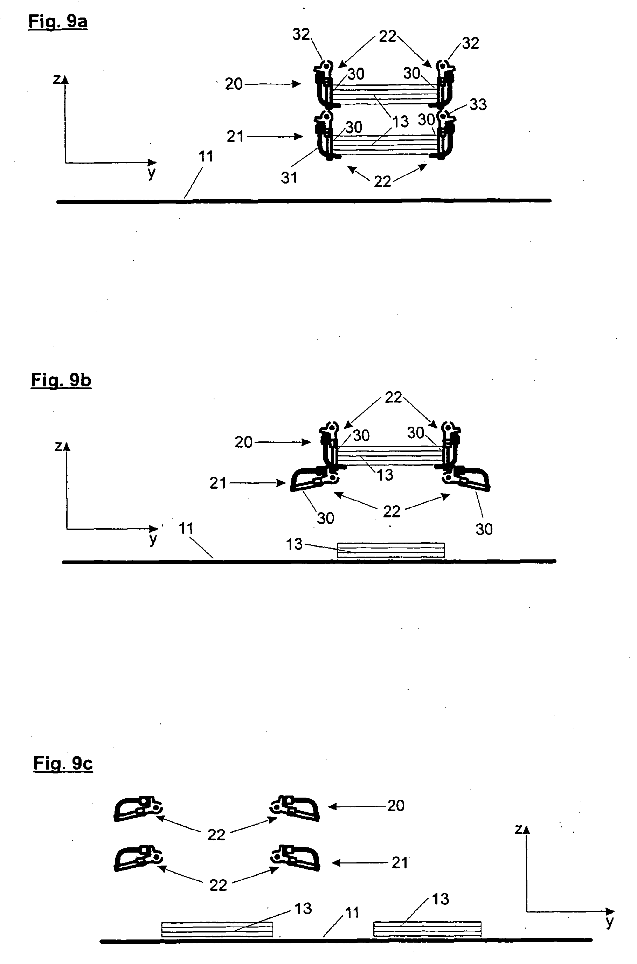

- Fig. 9 a, b, c: Skizzen (Seitenansicht) eines Doppelgreifers

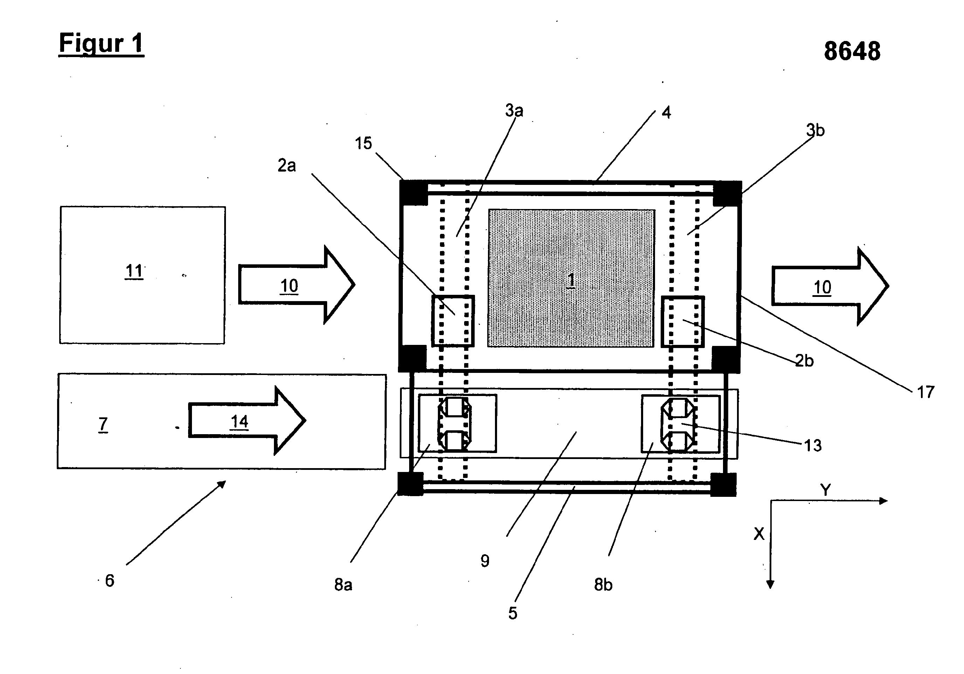

Fig. 1 zeigt eine Skizze eines Ausführungsbeispiels, das kein Teil der vorliegenden Erfindung ist, bei dem einem Palettierbereich 1 zwei unabhängig voneinander bewegliche Greifer 2 a, b zugeordnet sind. Eine beispielhafte nähere Darstellung des Funktionsprinzips solcher Greifer ist der DE 103 09 131 A1 zu entnehmen, deren Passagen, die sich mit der Funktion der Greiferarme befassen, als Bestandteil dieser Druckschrift anzusehen sind.

Allgemein sind jedoch mit Greifer oder Greifvorrichtung alle Vorrichtungen umfasst, die zum Zwecke des Palettierens Stapel flacher Gegenstände erfassen können. Hierzu könnten auch drei oder mehr Greiferarme oder eine Vakuumsaugvorrichtung vorgesehen werden.

Beide Greifer 2 a,b sitzen auf x-y-Verfahreinheiten. Diese Verfahreinheiten umfassen Schienen 3 a, b, auf denen der jeweilige Greifer in x-Richtung verfahren werden kann. Ein Verfahren der Schienen 3 a, b und Greifer 2 a, b entlang der Schienen 4 und 5 gewährleistet die Beweglichkeit der Greifvorrichtungen in y-Richtung.

Im vorliegenden Ausführungsbeispiel umfasst die Zuführvorrichtung 6 das Zuführband 7 und die Ausrichte- und Entnahmestationen 8 a, b sowie das Transportrollensystem 9, bei dem auf eine detailliertere Darstellung der Transportrollen verzichtet wurde. Die Stapel 13 flacher Gegenstände werden in der Richtung des Pfeils 14 über die Zuführvorrichtung 6 in die Ausrichte- und Entnahmestation 8a, b gefördert.

Durch die Pfeile 10 wird eine mögliche Transportrichtung für die Paletten 11 angedeutet. Die Paletten 11 können in jeder erdenklichen Art dem Palettierbereich 1 zugeführt werden. Sie haben hier die Größe des Palettierbereichs 1. Oft befinden sich unter dem Palettierbereich 1 ganze Stapel unbefüllter Paletten. Dieser Umstand wird beispielsweise in der bereits erwähnten EP 0 652 171 B1 dargestellt. Um eine größere Flexibilität der Palettiervorrichtung in z-Richtung zu gewährleisten, kann daher eine Verfahrbarkeit der Greifer in z-Richtung vorgesehen werden.

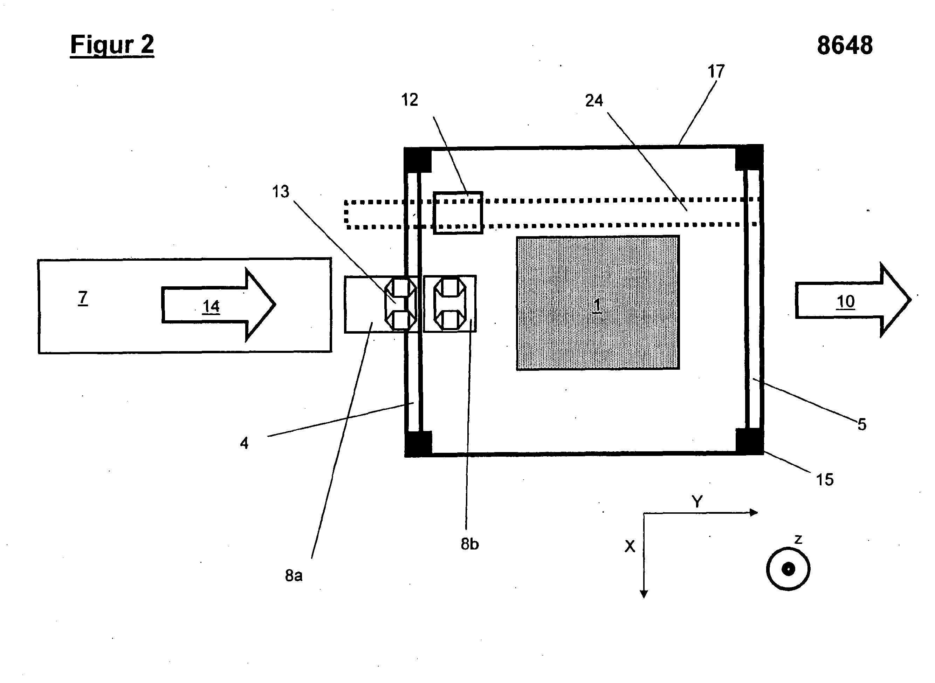

In Figur 2 wird ein erstes Ausführungsbeispiel der Erfindung dargestellt, bei dem ein Doppelgreifer 12 gleich zwei Pakete gleichzeitig transportieren kann. Auch bei diesem Ausführungsbeispiel werden die Stapel beziehungsweise Pakete 13 von dem Zuführband 7 in Richtung des Pfeiles 14 zu der Übemahmeposition des Greifers 12 gefördert. An diesen Übernahmestationen befinden sich die Ausrichte- und Entnahmestationen 8a, b. Hier werden die Stapel vorteilhafterweise bereits so ausgerichtet, dass sie auf der Palette 11 ordentlich und damit platzsparend angeordnet werden können. Der Doppelgreifer 12 transportiert die Pakete an die richtige Stelle, wobei die Endposition der jeweils gleichzeitig transportierten Stapel direkt benachbart, aber auch in einigem Abstand auf der Palette 11 liegen kann. Möglich wird vor allem letzteres, wenn der Doppelgreifer über Greifwerkzeuge verfügt, die einzeln ansteuerbar sind. Der Doppelgreifer 12 wird in diesem Ausführungsbeispiel auf der y-Verfahrschiene 24 in y-Richtung bewegt. Diese Schiene ist ihrerseits auf den hier gestellfesten Schienen 4 und 5 in x-Richtung verfahrbar.

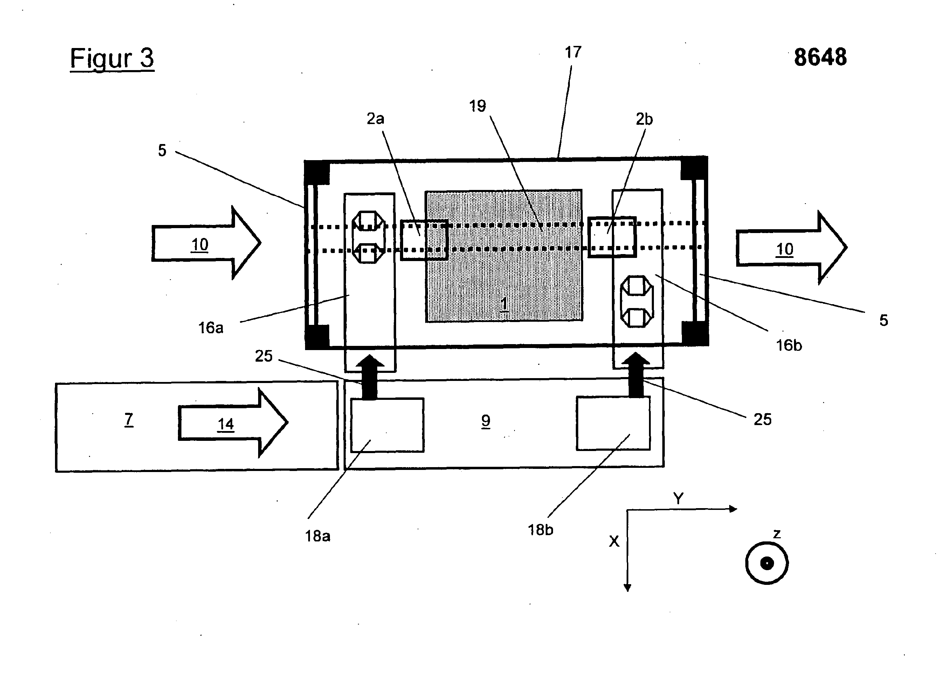

Auch in Figur 3 benennen wieder gleiche Bezugszeichen gleiche Funktionsbausteine der Palettiervorrichtung. Von besonderem Interesse ist, dass der Transport der Stapel 13 in x-Richtung nach den Ausrichtestationen 18 a, b durch die seitlichen Transportbänder 16 a, b erfolgt, von denen die Stapel durch die Greifer 2a, b an variablen Übergabestellen, das heißt an einer gerade passenden Position in x-Richtung auf dem Band abgenommen werden können. Die beiden Greifer 2 a, b befinden sich auch auf einer gemeinsamen in x-Richtung verfahrbaren Schiene 19, so dass ihre Bewegung in x-Richtung zwangsgekoppelt ist. Auch diese gemeinsame verfahrbare Schiene 19 bewegt sich wieder auf den hier gestellfesten Schienen 4 und 5. In den Figuren 1 bis 3 sind das Maschinengestell mit dem Bezugszeichen 17 und die vertikalen Stützpfeiler des Maschinengestells mit dem Bezugszeichen 15 bezeichnet.

Bei diesem zweiten Ausführungsbeispiel der Erfindung gemäß Figur 3 ist interessant festzustellen, dass die Kopplung der Bewegung der Greifvorrichtungen 2a, 2b in x-Richtung durch die Schiene 19 die Förderbänder 16a und 16b notwendig gemacht hat. Das Vorhandensein der beim Transport der Stapel in x-Richtung unabhängigen Förderbänder 16a und 16b ermöglicht jedoch eine Verkürzung der Verfahrwege der Schiene 19, da die Förderbänder 16a, 16b ja weitere Stapel 13 transportieren können, während vorhergehende Stapel 13 im Palettierbereich 1 abgelegt werden.

Die Schiene 19 kann sich daher das ständige Zurückfahren in x-Richtung bis zu einer Übergabeposition an den Ausrichte- und Entnahmestationen18a und 18b oder an einem fixen Punkt der Ausdehnung des Palettierbereichs in x-Richtung ersparen.

Zu diesem Zweck sollten die Zuführvorrichtung (6,16a,16b) und die Ladevorrichtung (2a,2b,3a,3b,4,5,19,24) derart ausgeprägt sein, dass flache Gegenstände an Übergabepunkten von der Zuführvorrichtung (6,16a,16b) an die Ladevorrichtung (2a,2b,3a,3b,4,5,19,24) übergebbar sind, die in zumindest einer Raumrichtung (x,y,z,ϕ) an unterschiedlichen Stellen liegen. In einem Ausführungsbeispiel nach Figur 3 sind die zusätzlichen Förderbänder 16a, 16b für diese Möglichkeit entscheidend.

Weiter ist zu erwähnen, dass es bei einer Vorrichtung nach der Figur 3 möglich ist, den Wirkbereich der beiden der Schiene 19 zugeordneten Greifvorrichtungen 2a und 2b in y-Richtung gegeneinander abzugrenzen. Auf diese Weise könnte beispielsweise jeweils eine Hälfte des Palettierbereichs 1 nur von einer Greifvorrichtung 2a, 2b beschickbar sein. Auf diese Weise würden Zusammenstöße zwischen den beiden Greifvorrichtungen vermieden und unter Umständen regelungstechnischer Aufwand gespart. Unterzieht man sich jedoch diesem Aufwand, hat man die Möglichkeit, Stapel "verschachtelt" abzulegen, das heißt beide Hälften können - gegebenenfalls gleichzeitig - von beiden Greifvorrichtungen beladen werden, was insbesondere bei komplizierteren Ablagemustern vorteilhaft sein kann.

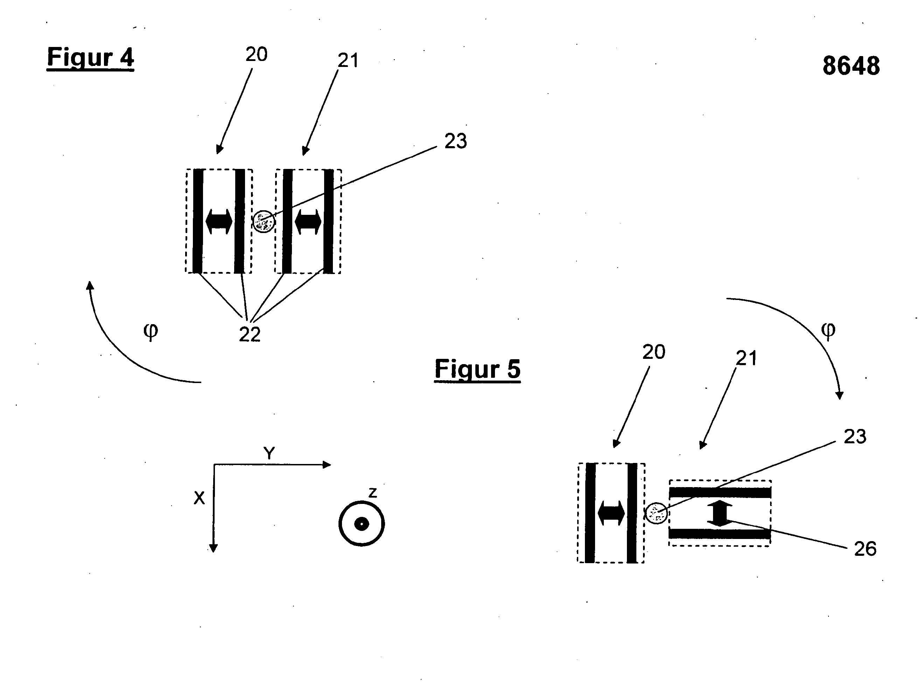

Die Figuren 4 und 5 befassen sich mit der Anordnung von Greiferzangenpaaren 20 und 21 zueinander. Diese beiden Greiferzangenpaare sind lediglich schematisch "von oben" dargestellt. Sie umfassen jeweils zwei Greifbacken 22. In bevorzugten Ausführungsbeispielen der Erfindung sind die beiden Greiferzangenpaare 20, 21 gemeinsam um die Drehachse 23 in ϕ-Richtung drehbar. Die Pfeile 26 deuten die Öffnungsbewegung der Greifbacken 22 an: Tests haben in Bezug auf die unterschiedlichen Ausführungsformen der Greifer beziehungsweise Greifvorrichtungen in Figur 4 und 5 zu Tage gefördert, dass sich die Drehung der Greifvorrichtungen 20 und 21 zueinander, wie sie in Figur 5 dargestellt ist, für besondere Anordnungen der Stapel in dem Palettierbereich eignen. Insbesondere, wenn Stapel auf der Palette eben auch um den gleichen Winkelbereich gedreht sind, entstehen hier Vorteile.

Umgekehrt hat auch die in Figur 4 gezeigte Anordnung ihre Vorteile insbesondere, wenn die Stapel parallel zueinander abgelegt werden. Ein weiterer Vorteil dieser Art der Anordnung besteht in der geringeren Massenträgheit bezüglich der Achse 23, im Vergleich zu der Anordnung der Greifer 20, 21 nach Figur 5. Dies ergibt sich aus der kompakteren Anordnung der Greifer in Figur 4 gegenüber der in Figur 5. Die Massenträgheit ist jedoch entscheidend für die Geschwindigkeit und den Preis einer Drehvorrichtung für die Greifer, die oft Bestandteil der Bewegungsvorrichtung für die Greifer ist und daher oft bei den Linearbewegungen mitgeführt wird.

## Patentansprüche

1. Vorrichtung zum Palettieren von Stapeln (13) flacher Gegenstände - vorzugsweise von Säcken oder Sackhalbzeugen - welche folgende Merkmale umfasst:
- zumindest einen Palettierbereich (1), in dem zumindest eine Palette (11) beladen wird,
- zumindest eine Ladevorrichtung, welche die Stapel (13) in dem Palettierbereich (1) anordnet und welche zumindest zwei Greifvorrichtungen (2a,2b;12;20,21) zum Ergreifen der Stapel (13) und ein Bewegungsmittel zum Bewegen der zumindest zwei Greifvorrichtungen (2a,2b;12;20,21) relativ zum Palettierbereich umfasst, und
- zumindest eine Zuführvorrichtung (6), welche die Stapel (13) an die Ladevorrichtung heranführt,
**gekennzeichnet dadurch, dass** das Bewegungsmittel eine in eine horizontale Richtung (x) Verfahrbare Schiene (19; 24) aufweist und dass
die zumindest zwei Greifvorrichtungen (2a,2b;12;20,21) sich auf dieser gemeinsamen, verfahrbaren Schiene (19,24) befinden, so dass ihre Bewegung in der Verfahrrichtung (x) der Schiene (19,24) zwangsgekoppelt ist.

2. Vorrichtung nach dem vorstehenden Anspruch,
**dadurch gekennzeichnet, dass** das Bewegungsmittel
die Bewegung der zumindest zwei Greifvorrichtungen höchstens in der horizontalen Richtung (x) koppelt.

3. Vorrichtung nach einem der vorstehenden Ansprüche,
**dadurch gekennzeichnet, dass**
die Zuführvorrichtung (6) über Drehstationen (8a, 8b, 18a, 18b) zum Ausrichten der Stapel (13) verfügt.

4. Vorrichtung nach einem der vorstehenden Ansprüche,
**dadurch gekennzeichnet,**
**dass** mit den zumindest zwei Greifvorrichtungen (2a,2b;12,20,21) jeweils der gesamte Palettierbereich (1) beladbar ist, oder
**dass** mit zumindest zwei Greifvorrichtungen (2a,2b;12,20,21) jeweils nur ein Teilbereich des Palettierbereichs beladbar ist.

5. Vorrichtung nach einem der vorstehenden Ansprüche, 1, 3 oder 4, **dadurch gekennzeichnet, dass**
- bei zumindest zwei Greifvorrichtungen (20,21) die Drehbewegung um eine Vertikale Achse gekoppelt ist,
- und dass die zumindest zwei Greifvorrichtungen (20,21) parallel zueinander ausgerichtet sind
- oder dass die zumindest zwei Greifvorrichtungen (20,21) orthogonal zueinander ausgerichtet sind.

6. Vorrichtung nach einem der vorstehenden Ansprüche
**dadurch gekennzeichnet, dass**
die Zuführvorrichtung (6,16a,16b) und die Ladevorrichtung derart ausgeprägt sind, dass Stapel (13) flacher Gegenstände an Übergabepunkten von der Zuführvorrichtung (6,16a,16b) an die Ladevorrichtung übergebbar sind, die in zumindest einer Raumrichtung (x,y,z,ϕ) an unterschiedlichen Stellen liegen.

7. Verfahren zum Beladen von Paletten mit Stapeln (13) flacher Gegenstände - vorzugsweise Säcke oder Sackhalbzeuge -, bei dem folgende Verfahrensmerkmale vorliegen:
- Beladen zumindest einer Palette (11) in einem dafür vorgesehenen Palettierbereich (1),
- Anordnen der Stapel (13) auf der zumindest einen Palette (11) mit zumindest einer Ladevorrichtung,
- Heranführen der Stapel (13) an die Ladevorrichtung mit einer Zuführvorrichtung (6),
- Beladen der zumindest einen Palette (11) mit zumindest zwei Greifvorrichtungen (2a,2b;12,20,21),
**dadurch gekennzeichnet, dass**
die zumindest zwei Greifervorrichtungen (2a,2b;12,20,21) auf einer gemeinsamen, in eine horizontale Richtung (x) verfahrbaren Schiene (19;24) geführt werden, so dass ihre Bewegung in der Verfahrrichtung (x) der Schiene (19;24) zwangsgekoppelt ist.

8. Verfahren nach dem vorstehenden Anspruch,
**dadurch gekennzeichnet, dass**
jede Greifvorrichtung (2a,2b;12,20,21) einen exklusiven Bereich der Palette (11) belädt.

9. Verfahren nach dem vorstehenden Anspruch zum Betreiben einer Vorrichtung nach Anspruch 6,
**dadurch gekennzeichnet, dass**
sich die folgenden Verfahrensmerkmale zumindest einmal wiederholen:
der auf einen ersten Stapel (13n) folgende zweite Stapel (13n+1) flacher Gegenstände wird in der zumindest einen Raumrichtung (x), in der die Position der Übergangspunktes variabel ist, in der selben Position übergeben, in der der erste Stapel (13n) flacher Gegenstände abgelegt ist oder wird.

## Claims

1. Device for palletizing stacks (13) of flat objects
- preferably bags or semifinished bags - which comprises the following features:
- at least one palletizing region (1) in which at least one pallet (11) is loaded,
- at least one loading device which arranges the stacks (13) in the palletizing region (1) and which comprises at least two gripping devices (2a, 2b; 12; 20, 21) for gripping the stacks (13) and a movement means for moving the at least two gripping devices (2a, 2b; 12; 20, 21) relative to the palletizing region, and
- at least one feed device (6) which guides the stacks (13) to the loading device,
**characterized in that** the movement means comprises a rail (19; 24) which can be displaced in a horizontal direction (x), and **in that** the at least two gripping devices (2a, 2b; 12; 20, 21) are situated on this common, displaceable rail (19; 24) such that their movement is positively coupled in the displacement direction (x) of the rail (19; 24).

2. Device according to the preceding claim, **characterized in that** the movement means couples the movement of the at least two gripping devices at most in the horizontal direction (x).

3. Device according to one the preceding claims, **characterized in that** the feed device (6) has rotary stations (8a, 8b, 18a, 18b) for aligning the stacks (13).

4. Device according to one of the preceding claims, **characterized in that** in each case the entire palletizing region (1) can be loaded by means of the at least two gripping devices (2a, 2b; 12; 20, 21), or **in that** in each case only a partial region of the palletizing region can be loaded by means of at least two gripping devices (2a, 2b; 12; 20, 21).

5. Device according to one of the preceding Claims 1, 3 or 4, **characterized in that**
- in at least two gripping devices (20, 21) the rotary movement is coupled about a vertical axis,
- and **in that** the at least two gripping devices (20, 21) are oriented parallel to one another
- or **in that** the at least two gripping devices (20, 21) are oriented orthogonally to one another.

6. Device according to one of the preceding claims, **characterized in that** the feed device (6, 16a, 16b) and the loading device are defined in such a way that stacks (13) of flat objects can be transferred from the feed device (6, 16a, 16b) to the loading device at transfer points which are situated at different locations in at least one spatial direction (x, y, z, ϕ).

7. Method for loading pallets with stacks (13) of flat objects - preferably bags or semifinished bags - in which the following method features are present:
- loading at least one pallet (11) in a palletizing region (1) provided for this purpose,
- arranging the stacks (13) on the at least one pallet (11) with at least one loading device,
- guiding the stacks (13) to the loading device with a feed device (6),
- loading the at least one pallet (11) with at least two gripping devices (2a, 2b; 12; 20, 21), **characterized in that** the at least two gripping devices (2a, 2b; 12; 20, 21) are guided on a common rail (19; 24) which can be displaced in a horizontal direction (x) such that their movement is positively coupled in the displacement direction (x) of the rail (19; 24).

8. Method according to the preceding claim, **characterized in that** each gripping device (2a, 2b; 12; 20, 21) loads an exclusive region of the pallet (11).

9. Method according to the preceding claim for operating a device according to Claim 6, **characterized in that** the following method features are repeated at least once: the second stack (13n+1) of flat objects which follows a first stack (13n) is transferred in the at least one spatial direction (x), in which the position of the transfer point is variable, in the same position in which the first stack (13n) of flat objects has been or is deposited.

## Revendications

1. Dispositif de palettage de piles (13) d'objets plats - de préférence de sacs ou sacs demi-finis - qui comprend les caractéristiques suivantes:
- au moins une zone de palettage (1) dans laquelle au moins une palette (11) est chargée,
- au moins un dispositif de chargement qui dispose la pile (13) dans la zone de palettage (1) et qui comprend au moins deux dispositifs de préhension (2a, 2b; 12; 20, 21) pour la saisie des piles (13) et un moyen de déplacement pour le déplacement des au moins deux dispositifs de préhension (2a, 2b; 12; 20, 21) relativement à la zone de palettage, et
au moins un dispositif d'amenée (6) qui amène les piles (13) au dispositif de chargement,
**caractérisé en ce que** le moyen de déplacement présente un rail (19; 24) déplaçable dans une direction horizontale (x), et **en ce que** les au moins deux dispositifs de préhension (2a, 2b; 12; 20, 21) se trouvent sur ce rail déplaçable commun (19; 24) de sorte que leur mouvement dans la direction de déplacement (x) du rail (19; 24) est couplé de force.

2. Dispositif selon la revendication précédente, **caractérisé en ce que** le moyen de déplacement couple le déplacement des au moins deux dispositifs de préhension au plus dans la direction horizontale (x).

3. Dispositif selon l'une des revendications précédentes, **caractérisé en ce que** le dispositif d'amenée (6) dispose de stations de rotation (8a, 8b, 18a, 18b) pour l'orientation des piles (13).

4. Dispositif selon l'une des revendications précédentes, **caractérisé en ce qu'**avec les au moins deux dispositifs de préhension (2a, 2b; 12; 20, 21) à chaque fois l'ensemble de la zone de palettage (1) peut être chargé, ou
**en ce qu'**avec au moins deux dispositifs de préhension (2a, 2b; 12; 20, 21) à chaque fois seulement une zone partielle de la zone de palettage peut être chargée.

5. Dispositif selon l'une des revendications précédentes 1, 3 ou 4, **caractérisé en ce que**
- dans au moins deux dispositifs de préhension (20, 21), le mouvement de rotation est couplé autour d'un axe vertical,
- et **en ce que** les au moins deux dispositifs de préhension (20, 21) sont orientés parallèlement l'un à l'autre,
- ou **en ce que** les au moins deux dispositifs de préhension (20, 21) sont orientés orthogonalement l'un à l'autre.

6. Dispositif selon l'une des revendications précédentes, **caractérisé en ce que** le dispositif d'amenée (6, 16a, 16b) et le dispositif de chargement sont réalisés de façon que des piles (13) d'objets plats peuvent être transférées à des points de transfert du dispositif d'amenée (6, 16a, 16b) au dispositif de chargement, qui se situent, dans au moins une direction spatiale (x,y,z,ϕ) à des emplacements différents.

7. Procédé pour le chargement de palettes avec des piles (13) d'objets plats - de préférence de sacs ou de sacs demi-finis -, dans lequel sont prévues les caractéristiques de procédé suivantes:
- le chargement d'au moins une palette (11) dans une zone de palettage (1) prévue à cette fin,
- l'agencement des piles (13) sur la au moins une palette (11) avec au moins un dispositif de chargement,
- l'amenée des piles (13) au dispositif de chargement avec un dispositif d'amenée (6),
- chargement de la au moins une palette (11) avec au moins deux dispositifs de préhension (2a, 2b; 12; 20, 21), **caractérisé en ce qu'**au moins deux dispositifs de préhension (2a, 2b; 12; 20, 21) sont guidés sur un rail commun (19; 24) déplaçable dans une direction horizontale (x) de sorte que leur mouvement dans la direction de déplacement (x) du rail (19; 24) est couplé de force.

8. Procédé selon la revendication précédente, **caractérisé en ce que** chaque dispositif de préhension (2a, 2b; 12; 20, 21) charge une zone exclusive de la palette (11).

9. Procédé selon la revendication précédente pour faire fonctionner un dispositif selon la revendication 6, **caractérisé en ce que** les caractéristiques de procédé suivantes sont répétées au moins une fois:
la deuxième pile (13n+1) d'objets plats faisant suite à une première pile (13n) est transmise dans la au moins une direction spatiale (x) dans laquelle la position des points de transition est variable, dans la même position dans laquelle la première pile (13n) d'objets plats est ou sera déposée.
